# EUROPÄISCHE PATENTSCHRIFT

(11) **EP 1 772 790 B1**
(45) Veröffentlichungstag und Bekanntmachung des Hinweises auf die Patenterteilung: **07.07.2010**
(21) Anmeldenummer: 06016750.9
(22) Anmeldetag: 10.08.2006
(51) Int. Cl.: G05D 3/14, G01B 5/00, F16C 29/00

(54) **Linearführungssystem mit einer Einrichtung zur Bestimmung einer Position eines Führungswagens**
Linear guiding system with an arrangement to determine the position of a guided carriage
Guide linéaire avec un équipement pour déterminer la position d un mobile

(30) Priorität: 12.08.2005 EP 05405477
(43) Veröffentlichungstag der Anmeldung: 11.04.2007
(73) Patentinhaber: Schneeberger Holding AG, 4914 Roggwil (CH)
(72) Erfinder: Götz, Klaus-Dieter, 74372 Sersheim (DE); Zillner, Karl , Dr., 75217 Birkenfeld (DE); Dann, Thomas, 76307 Karlsbad (DE)
(74) Vertreter: EGLI-EUROPEAN PATENT ATTORNEYS

(56) Entgegenhaltungen:
- EP-A2- 0 317 967
- WO-A-02/27270
- WO-A-91/16594
- DE-C1- 19 526 517
- US-A- 3 750 295
- US-A- 3 996 669
- US-A- 5 945 824

## Beschreibung

Die Erfindung betrifft ein Linearführungssystem mit einer Einrichtung zum Messen des von einem Führungswagen gegenüber einer Führungsschiene zurückgelegten Weges und/oder zur Bestimmung der Position des Führungswagens, wobei die Einrichtung einen an der Führungsschiene angeordneten Massstab und einen an dem Führungswagen montierten Lesekopf zum Abtasten des Massstabs umfasst.

Ein derartiges Linearführungssystem ist aus WO 02/27270 A1 bekannt, wobei in diesem Fall der Massstab eine Referenzmarke, die eine absolute (Referenz-) Position markiert, und eine Spur mit einer Vielzahl von Marken, die gemäss einer Inkrementalteilung angeordnet sind (Inkrementalspur), umfasst. Der Lesekopf ist derart ausgebildet, dass er sowohl die Inkrementalspur als auch Referenzmarke abtasten kann, wobei der Lesekopf über die jeweiligen Marken hinweg bewegt werden muss, um diese abzutasten. Das Abtasten der jeweilige Marken ist erst möglich, nachdem der Lesekopf an dem Führungswagen in einer Betriebsposition montiert ist. Um die absolute Position des Führungswagens bestimmen zu können, muss der Führungswagen nach der Montage des Lesekopfes mindestens einmal derart entlang der Führungsschiene bewegt werden, dass der Lesekopf die Referenzmarke überstreichen kann. Dieses Linearführungssystem hat den Nachteil, dass die Inbetriebnahme des Lesekopfes relativ viel Zeit (gemessen vom Beginn der Montage des Lesekopfes bis zu dem Zeitpunkt, an dem die absolute Position des Führungswagens durch eine Abtastung des Massstabs bekannt ist) in Anspruch nimmt und folglich die Fertigung und Funktionsprüfung eines derartigen Linearführungssystems aufwändig und kostspielig ist. Entsprechend sind der Ein- und Ausbau des Lesekopfes (beispielsweise zu Wartungszwecken) und der Austausch des Lesekopfes mit einer langen Betriebsunterbrechung verbunden.

Aus US 5945824 ist ebenfalls ein Linearführungssystem mit einem längs einer Führungsschiene bewegbaren Führungswagen und einer Messeinrichtung zum Messen des von dem Führungswagen gegenüber der Führungsschiene zurückgelegten Weges und/oder zur Bestimmung der Position des Führungswagens bekannt. Die Messeinrichtung umfasst einen an der Führungsschiene angeordneten Massstab und einen Lesekopf zum Abtasten des Massstabs. Der Massstab umfasst eine Inkrementalspur, bestehend aus einer Folge äquidistanter magnetischer Pole unterschiedlicher Polarität. Der Lesekopf umfasst einen magnetischen Sensor zum Abtasten der Inkrementalspur, welcher Sensor in einem Gehäuse an einer Stirnseite des Führungswagens montiert ist. Damit der Führungswagen eine vorgegebene absolute Position auf der Führungsschiene anfahren kann, muss der Führungswagen zunächst eine vorgegebene Referenzposition überfahren, welche von einem Detektor für diese Referenzposition registriert wird. Anschliessend kann eine absolute Position des Führungswagens durch eine Messung des jeweiligen Abstands zur Referenzposition bestimmt werden. Der momentane Abstand des Führungswagens relativ zur Referenzposition wird ermittelt durch eine Messung des Weges, der vom Führungswagen - ausgehend von der Referenzposition - entlang der Führungsschiene zurückgelegt wird. Dieser Weg wird durch Abtasten der Inkrementalspur mit Hilfe des Lesekopfes der Messeinrichtung und durch eine Auswertung von Signalen des Lesekopfes mittels einer Auswerteelektronik bestimmt.

Es ist die Aufgabe der vorliegenden Erfindung, die genannten Nachteile zu vermeiden und ein Linearführungssystem mit einer Einrichtung zum Messen des von dem Führungswagen gegenüber der Führungsschiene zurückgelegten Weges und/oder zur Bestimmung der.Position des Führungswagens zu schaffen, dessen Einrichtung zu einem möglichst frühen Zeitpunkt nach der Montage oder dem Austausch des Lesekopfes betriebsbereit ist. Weiterhin soll ein entsprechendes Verfahren zur Montage eines derartigen Linearführungssystems vorgeschlagen werden.

Diese Aufgabe wird durch ein Linearführungssystem mit den Merkmalen des Anspruchs 1 und ein Verfahren mit den Merkmalen des Anspruchs 9 gelöst.

Das Linearführungssystem umfasst eine Einrichtung zum Messen des von dem Führungswagen gegenüber der Führungsschiene zurückgelegten Weges und/oder zur Bestimmung der Position des Führungswagens, welche Einrichtung einen an der Führungsschiene angeordneten Massstab und einen an dem Führungswagen montierten Lesekopf zum Abtasten des Massstabs umfasst. Der Massstab erstreckt sich in der Längsrichtung der Führungschiene und umfasst mehrere Marken zur Codierung mindestens einer absoluten Position.

Gemäss der Erfindung ist vorgesehen, dass das Linearführungssystem eine Führung für den Lesekopf aufweist, längs der der Lesekopf beim Montieren relativ zum Führungswagen und relativ zur Führungsschiene derart bewegbar ist, dass er während der Bewegung mehrere Marken abtastet und am Ende der Bewegung eine Betriebsposition erreicht, wobei die abgetasteten Marken die Bestimmung einer absoluten Position des Lesekopfes ermöglichen und der Lesekopf in der Betriebsposition geeignet angeordnet ist, um den Massstab bei einer Bewegung des Führungswagens längs der Führungsschiene abzutasten.

Die genannte Führung für den Lesekopf ermöglicht es, dass während der Montage des Lesekopfes zwangsweise mehrere Marken überstrichen werden, die mindestens eine absolute Position codieren. Die Feststellung der absoluten Position wird daher bei der Montage des Lesekopfes erzwungen. Nach der Montage des Lesekopfes und seiner Fixierung am vorgesehenen Ort (in der Betriebsposition) ist damit auch die absolute Position des Führungswagens auf der Führungsschiene bestimmt. Das Linearführungssystem ist deshalb - einschliesslich der Einrichtung zum Messen und zum Bestimmen der Position des Führungswagens - unmittelbar nach der Montage einsatzbereit; selbst wenn der Führungswagen zuvor noch nicht längs der Führungsschiene bewegt wurde.

Die Marken des Massstabs, die jeweils absolute Positionen codieren, können über die gesamte Länge des Massstabs verteilt sein. Das bringt den Vorteil, dass der Führungswagen bei der Montage des Lesekopfes des beliebige Position längs der Führungsschiene einnehmen kann. Der Führungswagen ist in jedem Fall derart positioniert, dass der Lesekopf bei seiner Montage zwangsläufig über mehrere derjenigen Marken hinwegbewegt wird, die die Bestimmung einer absoluten Position ermöglichen.

Die Führung für den Lesekopf kann im Rahmen der Erfindung in einer Reihe von Ausführungsformen realisiert werden.

In einer Ausführungsform des Linearführungssystems ist die Führung für den Lesekopf starr mit dem Führungswagen verbunden. Eine derartige Führung ermöglicht es, die Bewegung des Lesekopfes bei der Montage mit geringen Toleranzen und somit mit einer hohen Genauigkeit zu kontrollieren. Dadurch wird eine hohe Ortsauflösung hinsichtlich der Bestimmung der absoluten Position ermöglicht.

In einer Variante ist die Führung für den Lesekopf in bzw. an einem Gehäuse für den Lesekopf ausgebildet, wobei das Gehäuse am Führungswagen befestigt ist. Bei der Montage kann der Lesekopf entlang der Führung relativ zum Gehäuse und zum Führungswagen bewegt werden. Die Führung kann beispielsweise eine Nut sein, deren Form an eine Kontur des Lesekopfes angepasst ist.

In einer anderen Variante ist der Führungswagen mit einer Führung für ein Gehäuse, das den Lesekopf aufnimmt, ausgestattet. Um den Lesekopf am Führungswagen zu montieren, wird das Gehäuse zusammen mit dem Lesekopf längs der Führung und relativ zum Führungswagen bewegt und in eine Position gebracht, in der das Gehäuse am Führungswagen fixiert werden kann.

In einer weiteren Variante kann der Lesekopf so ausgebildet sein, dass die Führungsschiene des Linearführungssystems als Führung für den Lesekopf dienen kann.

Weitere vorteilhafte Einzelheiten der Erfindung sind in den abhängigen'Ansprüchen dargelegt.

In der folgenden Beschreibung der Erfindung wird der Führungswagen als beweglich gegenüber der Führungsschiene angenommen, wobei die Führungsschiene als ortsfest betrachtet wird. Diese Annahme ist nicht einschränkend für die Erfindung. Alle Betrachtungen sind analog auf den Fall übertragbar, dass der Führungswagen ortsfest und die Führungsschiene relativ zum Führungswagen bewegbar ist.

Weitere Einzelheiten, Merkmale und Vorteile des Gegenstandes der Erfindung ergeben sich aus der nachfolgenden Beschreibung der beigefügten Zeichnungen, in denen - beispielhaft und schematisch - verschiedene Ausführungsformen des erfindungsgemässen Linearführungssystems dargestellt sind.

In den Zeichnungen zeigen:
- Fig. 1: eine perspektivische Darstellung eines Linearführungssystems gemäss einer ersten Ausführungsform der vorliegenden Erfindung, mit einer Führung für den Lesekopf, die an einem Gehäuse für den Lesekopf ausgebildet ist;
- Fig. 2: eine perspektivische Darstellung des Linearführungssystems gemäss Fig. 1, wobei der Lesekopf vom Gehäuse getrennt und für eine Montage bereitgestellt ist;
- Fig. 3: eine perspektivische Darstellung eines Linearführungssystems gemäss einer zweiten Ausführungsform der vorliegenden Erfindung, mit einer Führung für ein Gehäuse des Lesekopfes.

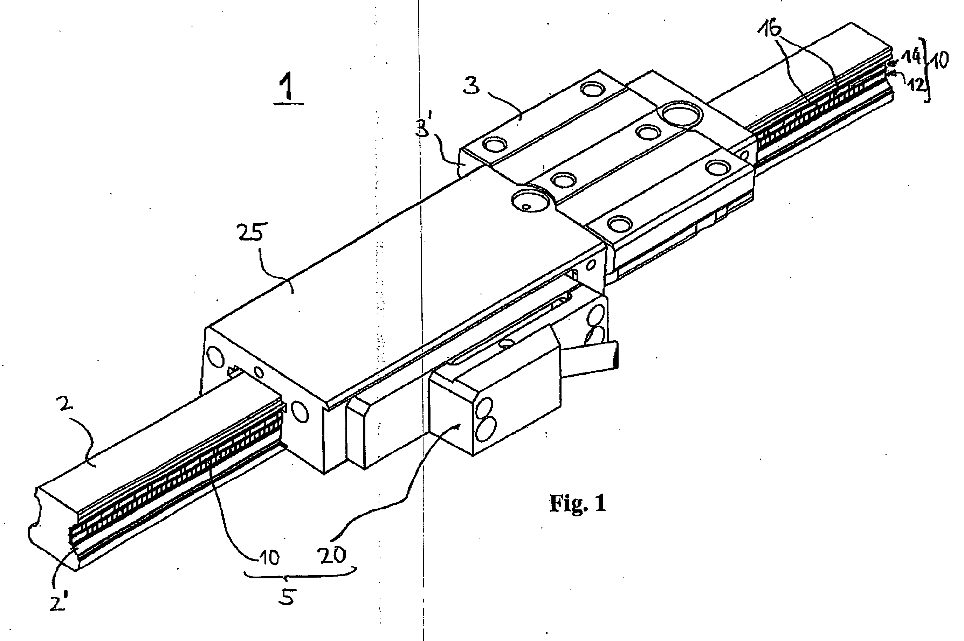

In Figur 1 ist ein Linearführungssystem 1 dargestellt, welches' einen auf einer Führungsschiene 2 angeordneten Führungswagen 3-und eine-Einrichtung 5 zum Messen des von dem Führungswagen 3 gegenüber der Führungsschiene 2 zurückgelegten Weges und/oder zur Bestimmung der Position des Führungswagens 3 umfasst.

Die Einrichtung 5 umfasst einen Massstab 10 und einen Lesekopf 20 zum Abtasten des Massstabs 10.

Im vorliegenden Beispiel ist der Massstab 10 an einer seitlichen Fläche 2' der Führungsschiene 2 angeordnet.

Dieser Massstab 10 besteht in den vorliegenden Ausführungsbeispielen aus einer Inkrementalspur 12 und einer Referenzspur 14. Die Referenzspur 14 ist aus Referenzmarken 16 gebildet, die jeweils verschiedene spezifische Orte markieren und somit verschiedene absolute Positionen auf dem Massstab 10 codieren.

Der Massstab 10 ist im vorliegenden Beispiel als Magnetband ausgebildet. Das Magnetband wird auf der fertiggeschliffenen Führungsschiene 2 aufgeklebt und überschliffen. Danach erfolgt die Magnetisierung des Magnetbandes. Dazu wird ein Magnetisierkopf an der Führungsschiene 2 entlang bewegt. Die Ausrichtung der entstehenden magnetischen Nord- und Südpole wird durch eine lasergestützte Längenmesseinrichtung kontrolliert. Die Abstände, zwischen verschiedenen Bereichen mit entgegengesetzter Magnetisierung betragen typischerweise 200 µm. Es werden zwei parallel angeordnete Magnetspuren aufgebracht: die Inkrementalspur 12 und die Referenzspur 14. Die Inkrementalspur 12 ist dadurch gekennzeichnet, dass in den oben genannten Abständen magnetisierte Bereiche, die die jeweiligen Marken der Inkrementalspur 12 definieren, ausgebildet sind. Die Referenzmarken 16 der Referenzspur 14 sind ebenfalls als magnetisierte Bereiche (Nord- und Südpole) ausgebildet. Die Referenzmarken 16 können gemäss einer bestimmten Codierung aufgebracht sein, um verschiedene absolute Positionen zu kennzeichnen. Nach dem Aufbringen der Magnetspuren wird das Magnetband durch ein Abdeckband gegen äussere Einflüsse geschützt. Das Abdeckband wird dabei mittels eines Lasers rundum dicht verschweisst.

Der Lesekopf 20 selbst besteht aus einem federbelasteten Keramikgleiter 26, in dem sich ein magnetoresistiver (MR-). Sensor und ein Teil der Auswerteelektronik befindet. Zum Abtasten des Massstabs 10 wird der Keramikgleiter 26 mit dem Massstab 10 in Kontakt gebracht und in der Längsrichtung des Massstabs 10 derart bewegt, dass die verschiedenen Marken mit Hilfe des MR-Sensors registriert werden können. Die berührende Arbeitsweise erlaubt eine gegen Verschmutzung unempfindliche Funktion des Lesekopfes 20, da beispielsweise Späne oder ähnliche Schmutzpartikel durch den Gleiter 26 zur Seite geschoben werden.

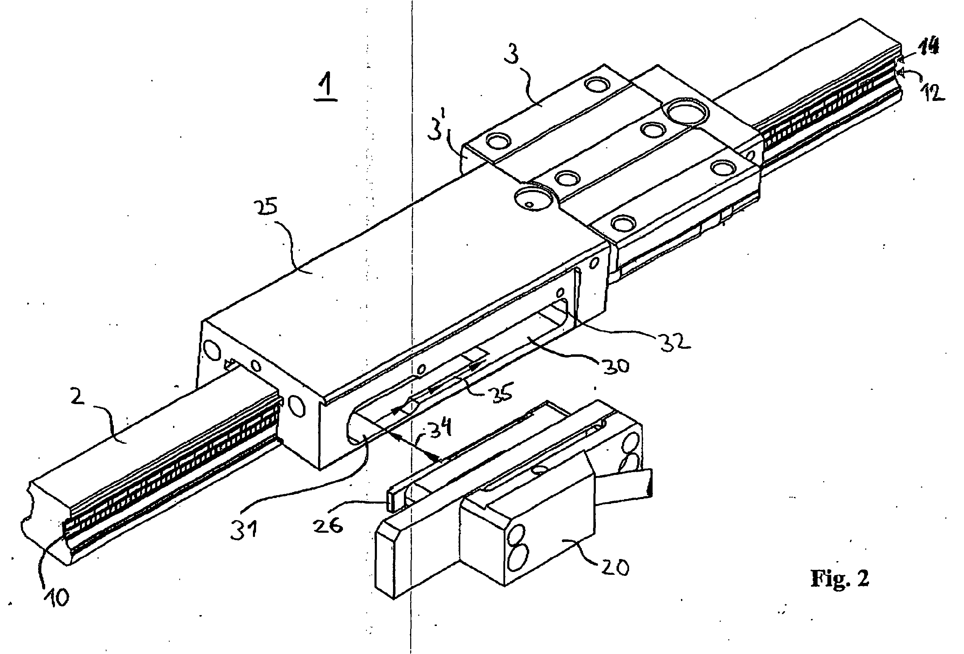

In einem ersten Ausführungsbeispiel gemäss Fig. 1 und 2 ist der Lesekopf 20 in einem Gehäuse 25 untergebracht, das am Führungswagen 3 fest montiert ist.

Das Gehäuse 25 weist an der dem Massstab 10 zugewandten Seite einen Schlitz 30 auf, der zur Aufnahme des Lesekopfes 20 und zur Führung des Lesekopfes 20 während der Montage dient. Der Lesekopf 20 wird zur Montage in Richtung der in Fig. 2 angegebenen Pfeile 34 und 35 bewegt, d. h. der Lesekopf 20 wird zunächst in einer an einem Ende des Schlitzes 30 ausgebildeten Öffnung 31 in den Schlitz 30 eingesetzt und relativ zum Gehäuse 20 in Richtung eines am anderen Ende des Schlitzes 30 angeordneten Anschlags 32 und damit auch relativ zum Führungswagen 3 und parallel zur Führungsschiene 2 bewegt. Während dieser Bewegung legt der Lesekopf 20 einen bestimmten Weg entlang des Massstabes 10 zurück. Der Lesekopf 20 wird dann am Gehäuse 25 fixiert, z.B. durch Verschrauben. Dieser Weg ist in den hier beschriebenen Ausführungsbeispielen so bemessen, dass einige (z.B. drei) kodierte Referenzmarken 16 zwangsweise überstrichen werden. Wenn nun der Lesekopf 20 an dem Anschlag 32 anschlägt, liegen im Falle des hier beschriebenen Ausführungsbeispiels einige (z.B. drei) Auslesungen von Referenzmarken 16 vor und die Position des Führungswagens 3 auf der Führungsschiene 2 ist eindeutig bestimmt. Das Gehäuse 25 umschliesst die Führungsschiene 2 U-förmig und trägt Dichtungselemente zum Abdichten von Wälzkörperführungen des Führungswagens 3. Eine flexible Verbindung zwischen Lesekopf 20 und Gehäuse 25 oder Gehäuse 25 und Führungswagen 3 ist nicht vorgesehen. Der Lesekopf kann über eine konventionelle Verbindung zur Übertragung von Daten und Signalen mit einer Kontrolleinheit (nicht dargestellt) verbunden werden, in welcher die vom Lesekopf generierten Daten und Signale aufbereitet werden.

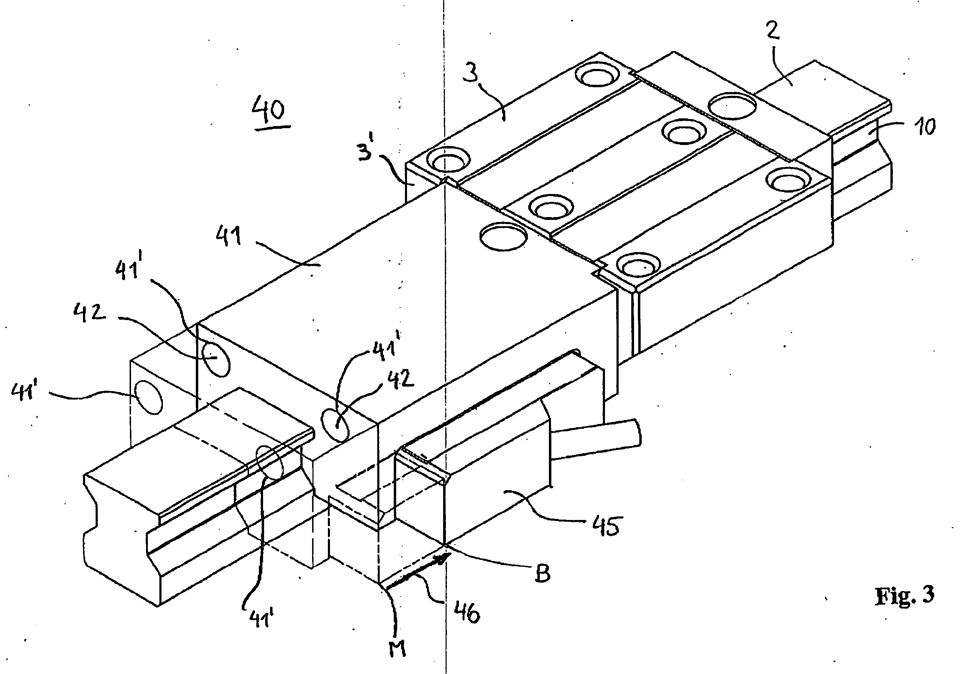

Fig. 3 zeigt - als ein zweites Ausführungsbeispiel - ein Linearführungssystem 40, das hinsichtlich Führungsschiene 2, Führungswagen 3 und Massstab 10 mit der Konstruktion des Linearführungssystems 1 übereinstimmt. Zum Abtasten des Massstabs ist ein Lesekopf 45 vorgesehen, der funktionell dem Lesekopf 20 entspricht. Der Lesekopf 45 ist in ein Gehäuse 41 eingebaut, dessen Form an die Querschnittskontur der Führungsschiene 2 angepasst ist. Das Gehäuse 41 kann zusammen mit dem Lesekopf 45. an den Wagen 3 montiert werden. Um das Gehäuse 41 und den Lesekopf 45 bei der Montage präzise führen zu können, sind zwei stabförmige Führungen 42 vorgesehnen, die an einer Stirnfläche 3' des Wagens 3 angebracht sind (wobei in Fig. 3 nur eine runde Endfläche der jeweiligen Führung 42 erkennbar ist). Das Gehäuse 41 weist zwei Bohrungen 41' auf, deren Form und Anordnung so gewählt ist, dass die Führungen 42 nahezu spielfrei in die Bohrungen 41' passen. Bei der Montage wird das Gehäuses 41 entlang der Bohrungen 41' auf die Führungen 42 gesetzt (wie in Fig. 3 gezeigt) und entlang der Führungen 42 relativ zum Führungswagen 3, zur Führungsschiene 2 und zum Massstab 10 bewegt, wie in Fig. 3 durch einen Pfeil 46 angedeutet ist. In Fig. 3 sind der Lesekopf 45 und das Gehäuse 41 in zwei verschiedenen Stellungen dargestellt: in einer Montageposition M (mit gestrichelten Linien) und in einer Betriebsposition B (mit durchgezogenen Linien), wobei die Betriebsposition B erreicht ist, wenn das Gehäuse 41 an die Stirnfläche 3' des Führungswagens 3 stösst und somit eine Stellung annimmt, in der das Gehäuse 3 fixiert werden kann. Der Lesekopf 45 ist derart im Gehäuse 41 montiert, das der Lesekopf 45 auf dem Weg zwischen den Positionen M und B mehrere Referenzmarken 16 überstreicht, so dass beim Erreichen der Betriebsposition B die Möglichkeit besteht, mindestens eine absolute Position, die durch die vom Lesekopf 45 registrierten Referenzmarken 16 codiert ist, zu bestimmen.

In den vorstehend beschriebenen Ausführungsbeispielen sind die kodierten Referenzmarken als auslesbare magnetische Information ausgebildet und der Lesekopf liest zumindest die Daten der kodierten Referenzmarken magnetisch aus. Es sollte aber betont werden, dass alternativ auch vorgesehen werden kann, dass die Referenzmarken sichtbare oder unsichtbare optische Marken umfassen und der Lesekopf die Marken mit einem optischen Sensor registriert.

Mehrere Referenzmarken 16 können mit unterschiedlichen Abständen längs des Massstabs 10 verteilt sein, um (somit "abstandscodiert") eine oder mehrere absolute Positionen zu kennzeichnen.

Um absolute Positionen zu codieren, ist es nicht notwendig, dass der Massstab 10 eine Spur mit Referenzmarken und eine Inkrementalspur aufweist. Als Alternative kann ein Massstab verwendet werden, der eine Spur mit einem sich längs der Führungsschiene 2 erstreckenden absoluten Codemarkenmuster (d.h. mit einer Spur von Marken, die den jeweiligen Ort eindeutig kennzeichnen und für jeden Ort eine absolute Positionsinformation codieren) aufweist.

In den vorstehend beschriebenen Ausführungsbeispielen umfasst der jeweilige Lesekopf eine separate Stromversorgung (beispielsweise in Form einer Batterie, eines Akkumulators oder Kondensators), die so ausgebildet ist, dass mittels des Lesekopfes bei der Montage ohne externe Energieversorgung die jeweilige absolute Position erkannt und im Lesekopf gespeichert werden kann, bis eine externe Energieversorgung, die beispielsweise durch eine Maschinensteuerung bereitgestellt werden kann, wieder aktiv ist.

## Patentansprüche

1. Linearführungssystem (1, 40),
mit zumindest einer Führungsschiene (2),
mit zumindest einem längs der Führungsschiene (2) bewegbaren Führungswagen (3) und
mit einer Einrichtung (5) zum Messen des von dem Führungswagen (3) gegenüber der Führungsschiene (2) zurückgelegten Weges und/oder zur Bestimmung der Position des Führungswagens,
welche Einrichtung (5) einen an der Führungsschiene (2) angeordneten Massstab (10) und einen an dem Führungswagen (3) montierten Lesekopf (20, 45) zum Abtasten des Massstabs (10) umfasst,
wobei der Massstab (10) sich in der Längsrichtung der Führungsschiene (2) erstreckt und mehrere Marken zur Codierung mindestens einer absoluten Position umfasst,
**dadurch gekennzeichnet, dass**
das Linearführungssystem (1, 40) eine Führung (30, 42) für den Lesekopf (20, 45) aufweist, längs welcher der Lesekopf (20, 45) beim Montieren des Lesekopfes (20, 45) relativ zum Führungswagen (3) zu bewegen ist, um den Lesekopf (20, 45) in eine Betriebsposition (32, B) zu bringen, wobei
der Lesekopf (20, 45) bei dieser Bewegung relativ zum Führungswagen (3) und relativ zur Führungsschiene (2) derart geführt ist, dass er mehrere Marken (16) des Massstabs (10) abtastet,
diese abgetasteten Marken (16) die Bestimmung einer absoluten Position des Lesekopfes (20, 45) ermöglichen und der Lesekopf (20, 45) in der Betriebsposition (32, B) geeignet angeordnet ist, um den Massstab (10) bei einer Bewegung des Führungswagens (3) längs der Führungsschiene (2) abzutasten.

2. Linearführungssystem nach Anspruch 1, **dadurch gekennzeichnet, dass** die Führung (30, 42) starr mit dem Führungswagen (3) verbunden ist.

3. Linearführungssystem nach einem der Ansprüche 1 oder 2, **dadurch gekennzeichnet, dass** der Lesekopf (20, 45) eine Stromversorgung umfasst, die so ausgebildet ist, dass bei der Montage des Lesekopfes (20, 45) die jeweilige absolute Position ermittelt und im Lesekopf gespeichert werden kann.

4. Linearführungssystem nach einem der Ansprüche 1 -3, **dadurch gekennzeichnet, dass** der Lesekopf (20, 45) in einem am Führungswagen (3) montierten Gehäuse (25, 41) angeordnet ist.

5. Linearführungssystem nach Anspruch 4, **dadurch gekennzeichnet, dass** die Führung (30) im und/oder am Gehäuse (25) ausgebildet ist und der Lesekopf (20) bei der Montage längs der Führung (30) und relativ zum Gehäuse (20) bewegbar ist.

6. Linearführungssystem nach Anspruch 4, **dadurch gekennzeichnet, dass** das Gehäuse (41) zusammen mit dem Lesekopf (45) bei der Montage längs der Führung (42) und relativ zum Führungswagen (3) bewegbar ist.

7. Linearführungssystem nach einem der vorstehenden Ansprüche, **dadurch gekennzeichnet, dass** der Lesekopf (20, 45) einen magnetischen oder optischen Sensor umfasst und der Massstab (10) mit magnetischen oder optischen Mitteln abtastbar ist.

8. Linearführungssystem nach einem der vorstehenden Ansprüche, **dadurch gekennzeichnet, dass** die Marken (16) Referenzmarken sind oder ein absolutes Codemarkenmuster bilden und/oder der Massstab (10) eine mit dem Lesekopf (25) abtastbare Inkrementalspur (12) umfasst.

9. Verfahren zur Montage eines Linearführungssystems (1, 40), insbesondere eines Linearführungssystems nach einem der Ansprüche 1 bis 8,
welches Linearführungssystem (1, 40) zumindest eine Führungsschiene (2),
einen längs der Führungsschiene (2) bewegbaren Führungswagen (3) und
eine Einrichtung (5) zum Messen des von dem Führungswagen (3) gegenüber der Führungsschiene (2) zurückgelegten Weges und/oder zur Bestimmung der Position des Führungswagens (3) umfasst
wobei die Einrichtung (5) einen an der Führungsschiene (2) angeordneten Massstab (10) und einen Lesekopf (20, 45) zum Abtasten des Massstabs (10) umfasst,
wobei der Massstab (10) sich in der Längsrichtung der Führungsschiene (2) erstreckt und mehrere Marken zur Codierung mindestens einer absoluten Position umfasst, welches Verfahren die folgenden Schritte umfasst:
der Lesekopf (20, 45) wird am Führungswagen (3) montiert,
**dadurch gekenntzeichnet, dass**
der Lesekopf (20) beim Montieren relativ zur Führungsschiene (2) und zum Führungswagen (3) bewegt und dabei so geführt wird, dass der Lesekopf (20, 45) bei dieser Bewegung mehrere Marken (16) abtastet und anschliessend eine Betriebsposition erreicht,
wobei eine durch die abgetasteten Marken codierte absolute Position des Lesekopfes (20, 45) ermittelt wird und der Lesekopf (20, 45) in der Betriebsposition (32, B) geeignet angeordnet ist, um den Massstab (10) bei einer Bewegung des Führungswagens (3) längs der Führungsschiene (2) abzutasten.

10. Verfahren nach Anspruch 9, **dadurch gekennzeichnet, dass** der Lesekopf (20) in ein am Führungswagen (3) angeordnetes Gehäuse (25) montiert wird und beim Montieren relativ zum Gehäuse (25) und dem Führungswagen (3) bewegt wird.

11. Verfahren nach Anspruch 9, **dadurch gekennzeichnet, dass** der Lesekopf (45) in einem Gehäuse (41) angeordnet ist und das Gehäuse (41) zusammen mit dem Lesekopf (45) relativ zum Führungswagen (3) bewegt und am Führungswagen (3) montiert wird.

## Claims

1. Linear guide system (1, 40),
with at least one guide rail (2),
with at least one guide carriage (3) which can be moved along the guide rail (2) and
with a device (5) for measuring the path travelled by the guide carriage (3) with respect to the guide rail (2) and/or for determining the position of the guide carriage,
which device (5) comprises a scale (10) arranged on the guide rail (2) and a read head (20, 45), which is installed on the guide carriage (3), for scanning the scale (10),
wherein the scale (10) extends in the longitudinal direction of the guide rail (2) and and comprises a plurality of marks for encoding at least one absolute position,
**characterised in that**
the linear guide system (1, 40) has a guide (30, 42) for the read head (20, 45), along which the read head (20, 45) is to be moved relatively to the guide carriage (3) when installing the read head (20, 45), in order to bring the read head (20, 45) into an operating position (32, B), wherein
the read head (20, 45) is guided relatively to the guide carriage (3) and relatively to the guide rail (2) during this movement in such a manner that it scans a plurality of marks (16) of the scale (10),
these scanned marks (16) enable the determination of an absolute position of the read head (20, 45) and the read head (20, 45) is arranged suitably in the operating position (32, B), in order to scan the scale (10) during a movement of the guide carriage (3) along the guide rail (2).

2. Linear guide system according to Claim 1, **characterised in that** the guide (30, 42) is rigidly connected to the guide carriage (3).

3. Linear guide system according to any one of Claims 1 or 2, **characterised in that** the read head (20, 45) comprises a power supply which is constructed in such a manner that the respective absolute position can be established and stored in the read head during the installation of the read head (20, 45).

4. Linear guide system according to any one of Claims 1 - 3, **characterised in that** the read head (20, 45) is arranged in a housing (25, 41) installed on the guide carriage (3).

5. Linear guide system according to Claim 4, **characterised in that** the guide (30) is constructed in and/or on the housing (25) and the read head (20) can be moved along the guide (30) and relatively to the housing (20) during the installation.

6. Linear guide system according to Claim 4, **characterised in that** the housing (41) together with the read head (45) can be moved along the guide (42) and relatively to the guide carriage (3) during the installation.

7. Linear guide system according to any one of the preceding claims, **characterised in that** the read head (20, 45) comprises a magnetic or optical sensor and the scale (10) can be scanned with magnetic or optical means.

8. Linear guide system according to any one of the preceding claims, **characterised in that** the marks (16) are reference marks or form an absolute code mark pattern and/or the scale (10) comprises an incremental track (12) which can be scanned with the read head (25).

9. Method for installing a linear guide system (1, 40), particularly a linear guide system according to any one of Claims 1 to 8,
which linear guide system (1, 40) comprises at least one guide rail (2),
a guide carriage (3) which can be moved along the guide rail (2) and
a device (5) for measuring the path travelled by the guide carriage (3) with respect to the guide rail (2) and/or for determining the position of the guide carriage (3),
wherein the device (5) comprises a scale (10) arranged on the guide rail (2) and a read head (20, 45) for scanning the scale (10),
wherein the scale (10) extends in the longitudinal direction of the guide rail (2) and comprises a plurality of marks for encoding at least one absolute position,
which method comprises the following steps:
the read head (20, 45) is installed on the guide carriage (3),
**characterised in that**
the read head (20) is moved relatively to the guide rail (2) and to the guide carriage (3) when installing and is guided in such a manner in the process that the read head (20, 45) scans a plurality of marks (16) during this movement and subsequently reaches an operating position,
wherein an absolute position of the read head (20, 45) encoded by means of the scanned marks is established and the read head (20, 45) is arranged suitably in the operating position (32, B), in order to scan the scale (10) during a movement of the guide carriage (3) along the guide rail (2).

10. Method according to Claim 9, **characterised in that** the read head (20) is installed into a housing (25) arranged on the guide carriage (3) and is moved relatively to the housing (25) and the guide carriage (3) when installing.

11. Method according to Claim 9, **characterised in that** the read head (45) is arranged in a housing (41) and the housing (41) is moved together with the read head (45) relatively to the guide carriage (3) and mounted on the guide carriage (3).

## Revendications

1. Système de guidage linéaire (1, 40),
avec au moins un rail de guidage (2),
avec au moins un chariot de guidage (3) déplaçable le long du rail de guidage (2) et
avec un dispositif (5) pour mesurer le trajet parcouru par le chariot de guidage (3) par rapport au rail de guidage (2) et/ou pour déterminer la position du chariot de guidage,
lequel dispositif (5) comprend une échelle (10) disposée sur le rail de guidage (2) et une tête de lecture (20, 45) montée sur le chariot de guidage (3), pour le balayage de l'échelle (10),
dans lequel l'échelle (10) s'étend dans le sens longitudinal du rail de guidage (2) et comprend plusieurs repères pour le codage d'au moins une position absolue,
**caractérisé en ce que**
le système de guidage linéaire (1, 40) comporte un guide (30, 42) pour la tête de lecture (20, 45), le long duquel la tête de lecture (20, 45) doit être déplacée lors du montage de la tête de lecture (20, 45) par rapport au chariot de guidage (3), pour placer la tête de lecture (20, 45) dans une position de fonctionnement (32, B), dans lequel
la tête de lecture (20, 45) est guidée de telle manière lors de ce mouvement par rapport au chariot de guidage (3) et par rapport au rail de guidage (2), qu'elle balaie plusieurs repères (16) de l'échelle (10),
ces repères balayés (16) permettent de déterminer une position absolue de la tête de lecture (20, 45), et la tête de lecture (20, 45) est disposée de façon appropriée dans la position de fonctionnement (32, B), pour balayer l'échelle (10) lors d'un mouvement du chariot de guidage (3) le long du rail de guidage (2).

2. Système de guidage linéaire selon la revendication 1, **caractérisé en ce que** le guide (30, 42) est relié fixement au chariot de guidage (3).

3. Système de guidage linéaire selon l'une des revendications 1 ou 2, **caractérisé en ce que** la tête de lecture (20, 45) comprend une alimentation en courant, conçue de telle manière que lors du montage de la tête de lecture (20, 45), la position absolue peut être détectée et enregistrée dans la tête de lecture.

4. Système de guidage linéaire selon l'une des revendications 1 à 3, **caractérisé en ce que** la tête de lecture (20, 45) est disposée dans un boîtier (25, 41) monté sur le chariot de guidage (3).

5. Système de guidage linéaire selon la revendication 4, **caractérisé en ce que** le guide (30) est formé dans et/ou sur le boîtier (25), et la tête de lecture (20) peut être déplacée le long du guide (30) et par rapport au boîtier (20) pendant le montage.

6. Système de guidage linéaire selon la revendication 4, **caractérisé en ce que** le boîtier (41) ensemble avec la tête de lecture (45) peut être déplacé le long du guide (42) et par rapport au chariot de guidage (3) pendant le montage.

7. Système de guidage linéaire selon l'une des revendications précédentes, **caractérisé en ce que** la tête de lecture (20, 45) comprend un capteur magnétique ou optique, et l'échelle (10) peut être balayée avec des moyens magnétiques ou optiques.

8. Système de guidage linéaire selon l'une des revendications précédentes, **caractérisé en ce que** les repères (16) sont des repères de référence ou forment un modèle de repères de codage absolu et/ou l'échelle (10) comprend une piste incrémentale (12) pouvant être balayée par la tête de lecture (25).

9. Procédé pour le montage d'un système de guidage linéaire (1, 40), en particulier d'un système de guidage linéaire selon l'une des revendications 1 à 8,
lequel système de guidage linéaire (1, 40) comprend au moins un rail de guidage (2),
un chariot de guidage (3) déplaçable le long du rail de guidage (2), et
un dispositif (5) pour mesurer le trajet parcouru par le chariot de guidage (3) par rapport au rail de guidage (2) et/ou pour déterminer la position du chariot de guidage (3),
dans lequel le dispositif (5) comprend une échelle (10) disposée sur le rail de guidage (2) et une tête de lecture (20, 45) pour le balayage de l'échelle (10),
dans lequel l'échelle (10) s'étend dans le sens longitudinal du rail de guidage (2) et comprend plusieurs repères pour le codage d'au moins une position absolue, lequel procédé comprend les étapes suivantes :
la tête de lecture (20, 45) est montée sur le chariot de guidage (3),
**caractérisé en ce que**
la tête de lecture (20) se déplace par rapport au rail de guidage (2) et au chariot de guidage (3) pendant le montage, en étant guidée de telle manière que la tête de lecture (20, 45) balaie plusieurs repères (16) pendant ce mouvement, puis atteint une position de fonctionnement,
dans lequel une position absolue de la tête de lecture (20, 45), codée par les repères balayés, est détectée, et la tête de lecture (20, 45) est disposée de façon appropriée dans la position de fonctionnement (32, B) pour balayer l'échelle (10) lors d'un mouvement du chariot de guidage (3) le long du rail de guidage (2).

10. Procédé selon la revendication 9, **caractérisé en ce que** la tête de lecture (20) est montée dans un boîtier (25) disposé sur le chariot de guidage (3), et déplacée par rapport au boîtier (25) et au chariot de guidage (3) pendant le montage.

11. Procédé selon la revendication 9, **caractérisé en ce que** la tête de lecture (45) est disposée dans un boîtier (41), et le boîtier (41) est déplacé par rapport au chariot de guidage (3), ensemble avec la tête de lecture (45), et monté sur le chariot de guidage (3).
